# EUROPÄISCHE PATENTSCHRIFT

(11) **EP 2 325 044 B1**
(45) Veröffentlichungstag und Bekanntmachung des Hinweises auf die Patenterteilung: **19.03.2014**
(21) Anmeldenummer: 10014716.4
(22) Anmeldetag: 17.11.2010
(51) Int. Cl.: B60P 1/44

(54) **Hubladebühne**
Cantilever lift
Plateforme de chargement par levage

(30) Priorität: 20.11.2009 DE 102009053904
(43) Veröffentlichungstag der Anmeldung: 25.05.2011
(73) Patentinhaber: MBB Palfinger GmbH, 27777 Ganderkesee (DE)
(72) Erfinder: Rulfs, Eike, 27804 Berne (DE)
(74) Vertreter: Möller, Friedrich

(56) Entgegenhaltungen:
- EP-A1- 0 362 039
- EP-A1- 0 383 488
- DE-U1- 29 707 803
- US-A1- 2004 009 056

## Beschreibung

Die Erfindung betrifft eine Hubladebühne gemäß dem Oberbegriff des Anspruchs 1.

Hubladebühnen wie z.B. EP0362039 dienen dazu, das Be- und Entladen von Fahrzeugen aller Art mit insbesondere schweren Gütern zu erleichtern. Solche Hubladebühnen verfügen über eine vorzugsweise an der Rückseite eines Aufbaus eines Fahrzeugs heb- und senkbar und in der Regel auch schwenkbar angelenkte Ladeplattform. Die Ladeplattform ist mittels eines Hubwerks an der Rückseite des Fahrzeugs angeordnet. Üblicherweise weist das Hubwerk mindestens einen Linearantrieb zum Heben bzw. Senken der Ladeplattform und mindestens einen weiteren Linearantrieb zum Verschwenken der Ladeplattform auf.

Die Ladeplattform weist an ihrem vom Fahrzeug weggerichteten hinteren Ende eine freie Querkante zur Bildung einer Spitze auf, während die Ladeplattform an der zum Fahrzeug weisenden Seite einen Querrand aufweist, der zur Verbindung der Ladeplattform mit dem Hubwerk flächig ausgebildet sein muss. Dadurch verfügt die Ladeplattform von der Seite gesehen über ein keilförmiges Profil. Die Folge ist, dass bei mit der Spitze auf den Boden abgesenkter Ladeplattform die eine Nutzfläche zum Verfahren der Ladeplattform bildende Oberseite desselben schräggerichtet ist.

In einigen Staaten gibt es Vorschriften, wonach die Nutzfläche der Ladeplattform horizontal verlaufen muss, wobei jedoch geringe Abweichungen von der Horizontalen zulässig sind. Die gesetzlichen Anforderungen werden somit auch erfüllt, wenn die Nutzfläche der Ladeplattform geringfügig schräggerichtet ist. Bei bekannten Ladeplattformen, deren zum Fahrzeug weisender Querrand eine Mindesthöhe zur stabilen Befestigung am Hubwerk erfordert, weist die Nutzfläche bei mit der freien Querkante (Spitze) auf den Boden aufliegenden Ladeplattform eine Neigung auf, die größer ist als die gesetzlich noch zulässige Maximalneigung gegenüber der Horizontalen.

Der Erfindung liegt nun die Aufgabe zugrunde, eine Hubladebühne zu schaffen, die trotz des eine Mindesthöhe aufweisenden Querrandes über eine Nutzfläche verfügt, die unter allen Umstände die maximal zulässige Neigung nicht überschreitet.

Eine Hubladebühne zur Lösung dieser Aufgabe weist die Merkmale des Anspruchs 1 auf. Demnach verfügt die obenliegende Nutzfläche der Ladeplattform über zwei in verschiedenen Ebenen liegenden Teilflächen. Dadurch kann eine Teilfläche eine geringere Neigung als die andere Teilfläche aufweisen, wobei die Teilfläche mit geringerer Neigung die gesetzlich vorgeschriebene maximale Abweichung gegenüber der Horizontalen nicht übersteigt. Auf diese Weise kann der zum Fahrzeug weisende Querrand der Ladeplattform eine übliche Höhe aufweisen, die eine ausreichend stabile Befestigung der Ladeplattform am Hubwerk zulässt.

Bevorzugt ist es vorgesehen, dass die Teilflächen ausgehend von der die Nutzfläche bildenden Oberseite der Ladeplattform unter einem stumpfen Winkel von weniger als 180° zueinander verlaufen. Die Nutzfläche bildet dadurch eine Mulde mit dem flachen Verlauf einer der beiden Teilflächen.

Bevorzugt ist eine parallel zum Querrand verlaufende Knickkante zwischen den unter einem Winkel von weniger als 180° zueinander verlaufenden Teilflächen vorgesehen. An dieser Knickkante laufen die in unterschiedlich gerichteten Ebenen liegenden Teilflächen übergangslos zusammen. Dadurch kommt es trotz der Bildung der Nutzfläche aus zwei unterschiedlich gerichteten Teilflächen zu einem stufenlosen Übergang zwischen den Teilflächen.

Bei einer vorteilhaften Ausgestaltung der erfindungsgemäßen Hubladebühne sind die Teilflächen unterschiedlich groß. Bevorzugt ist es vorgesehen, eine vom zum Fahrzeug weisenden Querrand ausgehende Teilfläche kürzer auszubilden als eine von der gegenüberliegenden freien Querkante, nämlich der Spitze, der Ladeplattform ausgehenden Teilfläche. Dadurch bildet die von der Spitze ausgehende, flacher verlaufende größere Teilfläche ein Großteil der Nutzfläche, sodass von der kürzeren steileren Teilfläche die gesamte Nutzfläche nur wenig verringert ist. Es werden so die gesetzlichen Vorschriften eingehalten, wenn ein Großteil der Nutzfläche, nämlich die längere flachere Teilfläche, unter allen Umständen nicht mehr als zulässig von der Horizontalen abweicht.

Bei einer bevorzugten Ausgestaltung der Erfindung ist die längere Teilfläche etwa vier- bis achtfach so lang wie die kürzere Teilfläche. Auch dadurch ist sichergestellt, dass ein Großteil der Nutzfläche, nämlich der von der längeren Teilfläche gebildete Abschnitt derselben, eine nur geringe Neigung gegenüber der Horizontalen aufweist, die innerhalb der gesetzlich zulässigen Grenzen liegt.

Eine vorteilhafte Weiterbildung der Erfindung sieht es vor, dass die von der freien Querkante (der Spitze) der Ladeplattform ausgehende längere Teilfläche der Nutzfläche unter einem sehr kleinen spitzen Winkel zum Boden oder zu einer Unterseite der Ladeplattform verläuft. Dieser kleine Winkel liegt vorzugsweise im Bereich von 2° bis 4°. Dieser Bereich entspricht der gesetzlich zusätzlichen Abweichung des Hauptteils der Nutzfläche von der Horizontalen.

Es ist des Weiteren vorgesehen, die kürzere Teilfläche unter einem größeren Winkel zum Boden oder zur Unterseite der Ladeplattform anzuordnen. Vorzugsweise ist der Winkel der kürzeren Teilfläche doppelt bis vierfach so groß wie der Winkel der größeren Teilfläche. Von der demzufolge steileren kürzeren Teilfläche wird der flache Verlauf der größeren Teilfläche ausgeglichen, wodurch die zum Querrand zur Befestigung am Hubwerk steiler verlaufende kleinere Teilfläche zu einem ausreichend hohen Querrand führt. Trotz der relativ flachen größeren Teilfläche der Oberseite der Ladeplattform kann infolge der steileren kürzeren Teilfläche der zum Fahrzeug weisende Querrand genauso hoch sein wie bei herkömmlichen Ladeplattformen, sodass die Ladeplattform mit den erfindungsgemäß abgewinkelten bzw. geknickt zueinander verlaufenden Teilflächen am Hubwerk für konventionelle Ladeplattformen befestigt werden kann.

Bei einer vorteilhaften Ausgestaltung der Erfindung beträgt der Winkel der kürzeren Teilfläche gegenüber dem Untergrund, auf dem die Ladeplattform absenkbar ist 8° bis 11°, während der Winkel der längeren Teilfläche nur 2° bis 4° gegenüber dem Boden beträgt.

Es ist eine besondere Ausgestaltung der Erfindung denkbar, bei der gegenüberliegende schmale Längsseitenbereiche der Ladeplattform eine durchgehende, ebenflächige Oberseite aufweist. Es entstehen so an den gegenüberliegenden Rändern der Nutzfläche vorstehende Randeinfassungen, die die Stabilität der Ladeplattform erhöhen und ein Herausverfahren von insbesondere beladenen Flurförderzeugen, wie beispielsweise Gabelhubwagen, von der Ladeplattform vermeiden.

Ein bevorzugtes Ausführungsbeispiel der Erfindung wird nachfolgend anhand der Zeichnung näher erläutert. In dieser zeigen:
- Fig. 1: eine schematische Seitenansicht eines hinteren Teils eines Fahrzeugs mit einer daran angeordneten erfindungsgemäßen Hubladebühne bei in eine Ladestellung geschwenkter Ladeplattform,
- Fig. 2: eine vergrößerte Darstellung nur der Ladeplattform in der Ladestellung der Fig. 1,
- Fig. 3: eine Darstellung nur der Ladeplattform in einer auf dem Boden abgesenkten Stellung, und
- Fig. 4: eine Draufsicht auf die Ladeplattform.

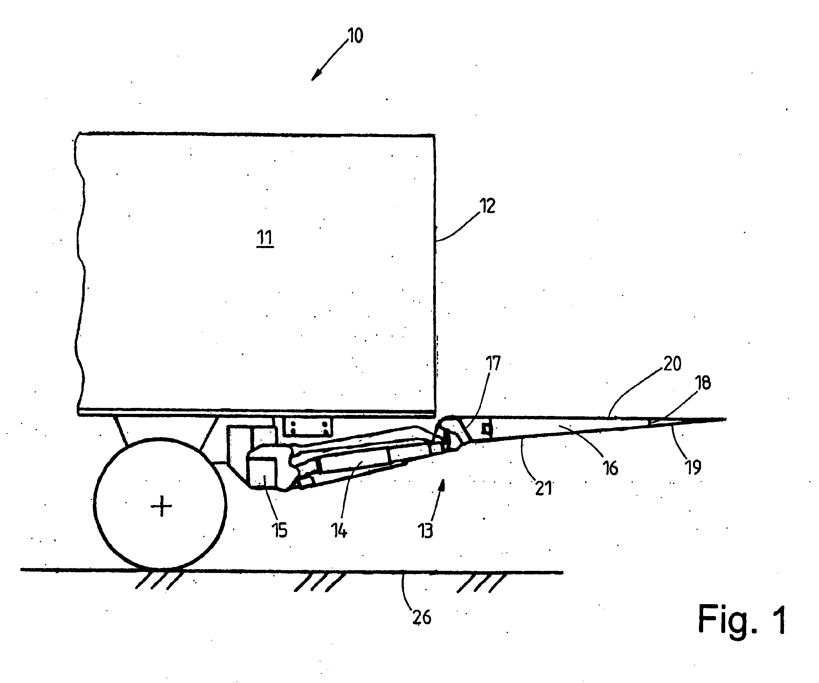

Die Fig. 1 zeigt teilweise ein Fahrzeug, und zwar im vorliegenden Falle einen Lastkraftwagen 10. Der Lastkraftwagen 10 verfügt über einen Aufbau 11, bei dem es sich im gezeigten Ausführungsbeispiel um einen sogenannten Kofferaufbau handelt. Der Rückseite 12 des Aufbaus 11 ist eine Hubladebühne 13 zugeordnet. Die Hubladebühne 13 verfügt über ein in üblicher Weise ausgebildetes Hubwerk 14, das an einem am Fahrwerksrahmen des Lastkraftwagens 10 quergerichtet zur Fahrtrichtung angeordneten Tragrohr 15 befestigt ist. Die Hubladebühne 13 verfügt außerdem über eine Ladeplattform 16, die mit einem zur Rückseite 12 des Lastkraftwagens 10 weisenden Querrand 17 mit dem Hubwerk 14 verbunden ist. Das Hubwerk 14 verfügt über Linearantriebe, und zwar vorzugsweise Hydraulikzylinder oder elektromotorisch antreibbare Gewindespindeln, womit die Ladeplattform 16 hebbar, senkbar und schwenkbar ist.

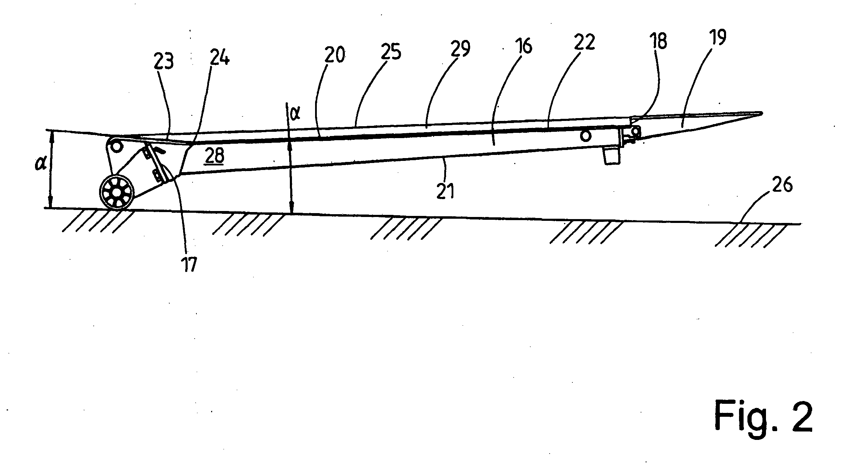

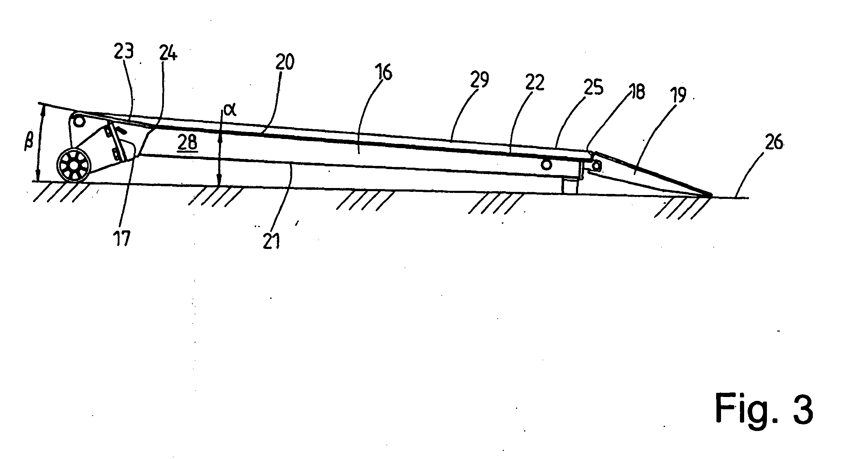

Die Ladeplattform 16 weist von der Seite gesehen (Fig. 2 und 3) ein keilartiges Profil auf. Demnach verringert sich die Höhe der Ladeplattform 16 ausgehend vom Querrand 17 zur Befestigung der Ladeplattform 16 am Hubwerk 14 zu einer gegenüberliegenden, hinteren Querkante 18 hin. Diese Querkante 18 kann eine hintere Spitze der Ladeplattform 16 bilden. Im gezeigten Ausführungsbeispiel verfügt die hintere Querkante 18 über eine schmale Fläche, an der eine frei schwenkbare, keilförmige Auffahrrampe 19 angeordnet ist. Das freie Ende der Auffahrrampe 19 läuft spitz zu, sodass diese die sogenannte Spitze am freien hinteren Ende der Ladeplattform 16 bildet.

Eine Oberseite der Ladeplattform 16 bildet eine Nutzfläche 20 derselben, worüber der Lastkraftwagen 10 be- und entladbar ist. Eine Unterseite 21 der Ladeplattform 16 verläuft in Richtung zur hinteren Querkante 18, an der im gezeigten Ausführungsbeispiel die Auffahrrampe 19 frei schwenkbar angelenkt ist, leicht konvergierend, wodurch die Höhe bzw. Dicke der Ladeplattform 16 zur hinteren, freien Querkante 18 hin abnimmt. Bei Ladeplattformen 16 ohne eine Auffahrrampe 19 laufen die Nutzfläche 20 und die Unterseite 21 der Ladeplattform 16 an der hinteren, freien Querkante 18 zur Bildung der Spitze der Ladeplattform 16 zusammen.

In besonderer Weise ist die Nutzfläche 20 auf der Oberseite der Ladeplattform 16 gestaltet. Diese Nutzfläche 20 ist nämlich gebildet aus zwei in verschiedenen Ebenen liegenden Teilflächen 22 und 23. Die Teilflächen 22 und 23 sind gegensinnig zueinander geneigt, indem sie ― von oben gesehen ― unter einem Winkel von weniger als 180° an einer parallel zum Querrand 17 verlaufenden Knickkante 24 zusammenlaufen. Die Knickkante 24 liegt dadurch etwas tiefer als eine das äußere Ende der Teilfläche 22 an der Querkante 18 und das äußere Ende der Teilfläche 23 am Querrand 17 verbindenden geraden Sehne 25. Auf diese Weise verfügt die Nutzfläche 20 der Ladeplattform 16 über eine von der Seite gesehen muldenartige Gestalt mit der tiefsten Stelle an der Knickkante 24 an der sich die zueinander gerichteten Ränder der Teilflächen 22 und 23 auf der Nutzfläche 20 treffen. Von der Knickkante 24 verlaufen die Teilflächen 22, 23 gegensinnig geneigt, also jeweils ansteigend, zur Querkante 18 einerseits und zum Querrand 17 andererseits.

Die Teilflächen 22 und 23 sind unterschiedlich lang. Vom zur Verbindung der Ladeplattform 16 mit dem Hubwerk 14 dienenden Querrand 17 der Ladeplattform 16 geht die kürzere Teilfläche 23 aus, während die längere Teilfläche 22 von der freien hinteren Querkante 18 ausgeht. Die lange Teilfläche 22 ist vier bis acht mal so lang wie die kurze Teilfläche 23. Im gezeigten Ausführungsbeispiel ist die lange Teilfläche 22 ohne die Auffahrrampe 19 fünf bis sechs mal so lang wie die kürzere Teilfläche 23.

Die Teilflächen 22 und 23 verlaufen unter unterschiedlichen Winkeln zur Horizontalen. Dabei verläuft die kürzere Teilfläche 23 über einen größeren Winkel als die längere Teilfläche 22. Folglich ist die größere Teilfläche 23 stärker geneigt als die kürzere Teilfläche 22. Die Neigung der kürzeren Teilfläche 23 kann zwei- bis vierfach so groß sein wie die Neigung der kürzeren Teilfläche 22. lm gezeigten Ausführungsbeispiel ist die Neigung der kürzeren Teilfläche 23 etwa drei mal so groß wie die Neigung der längeren Teilfläche 22. Die Neigungen der Teilflächen 22 und 23 sind gezielt auf den vollständig auf dem Boden 26 abgesenkten Zustand der Ladeplattform 16 abgestimmt. In diesem in der Fig. 3 gezeigten vollständig auf dem Boden abgesenkten Zustand der Ladeplattform 16, wobei die Auffahrrampe 19 mit ihrem spitzen freien Ende auf dem Boden 26 aufliegt, beträgt der Winkel α zwischen der großen Teilfläche 22 und dem Boden 26 2° bis 4°, liegt insbesondere im Bereich von 3° bis 3,4°. Die um ein Mehrfaches größere Neigung der kürzeren Teilfläche 23 gegenüber dem Boden 26 beträgt bei vollständig auf dem Boden abgesenkter Ladeplattform 16 (Fig. 3) 8° bis 11°, insbesondere 9,4° bis 9,5°. Dieser Winkel der kürzeren Teilfläche 23 ist in der Fig. 3 als Winkel β eingetragen.

Infolge der geknickten Nutzfläche 20 der Ladeplattform 16 verläuft bei vollständig auf dem Boden 26 abgesenkter Ladeplattform 16 (Fig. 3) der größte Teil ihrer Nutzfläche 20, nämlich die lange Teilfläche 22, unter einem sehr flachen Winkel α zum (horizontalen) Boden 26. Dieser kleine Winkel α erfüllt die gesetzlichen Forderungen, indem nämlich die Abweichung der Neigung der langen Teilfläche 22 von der Horizontalen innerhalb zulässiger Toleranzen liegt. Der demgegenüber steilere Verlauf der kürzeren Teilfläche 23 ist unbeachtlich, weil diese zur Erfüllung der gesetzlichen Vorschriften unbeachtlich ist. Außerdem führt die größere Neigung der kürzeren Teilfläche 23 dazu, dass sie eine Art "Bremskeil" für beispielsweise einen die Nutzfläche 20 überfahrenden Rollwagen dient.

In der Fig. 2 gezeigten Stellung der Ladeplattform 16, wenn diese hochgeschwenkt und hochgefahren ist, sodass sie die Ladefläche des Lastkraftwagens 10 über die Rückseite 12 desselben hin verlängert, verläuft die Neigung der langen Teilfläche 22 zur Horizontalen umgekehrt als in der Fig. 3 gezeigten auf dem Boden 26 abgesenkten und an dem Boden 26 angeklappten Stellung. In diesem Falle verläuft die lange Teilfläche 22 zur hinteren Querkante 18 hin ansteigend unter dem Winkel α. Dadurch wird die Neigung der kurzen Teilfläche 23 zur freien Querkante 18 hin verringert, indem die kurze Teilfläche 23 zur Querkante 18 hin nur noch um den Winkel α abfällt. Folglich verlaufen beide Teilflächen 22 und 23 in der die Ladefläche des Lastkraftwagens 10 verlängernden hochgefahrenen oder etwas hochgeschwenkten Position der Ladeplattform 16 unter dem gleichen Winkel α; nur in entgegengesetzten Richtungen.

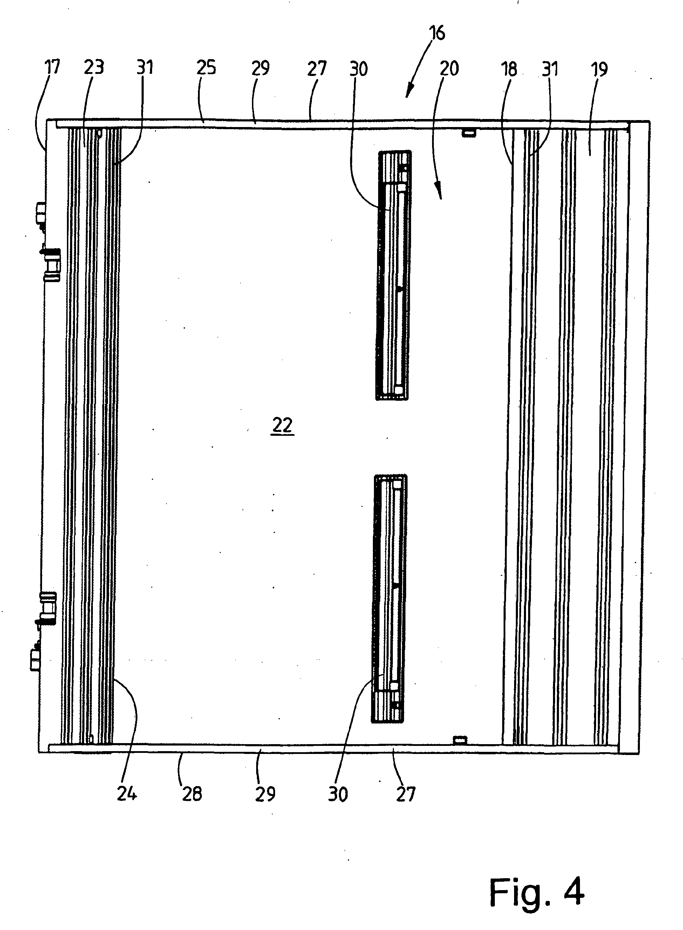

Die Fig. 4 lässt erkennen, dass gegenüber der Nutzfläche 20 an den gegenüberliegenden Längsrändem 27 der Ladeplattform 16 schmale streifenförmige Erhöhungen 29 vorsehen. Diese begrenzen die muldenartig vertiefte Nutzfläche 20 an den Längsrändern 27 und 28 der Ladeplattform 16. Die Oberseiten der Erhöhungen 29 verlaufen dabei gradlinig auf der Sehne 25 zwischen dem Querrand 17 und der Querkante 18 der Nutzfläche 20.

Die Hubladebühne 13 mit der Ladeplattform 16 eignet sich nicht nur für Lastkraftwagen 10 sondern Fahrzeuge aller Art, und zwar auch gezogene Fahrzeuge, nämlich Anhänger, Sattelauflieger oder dergleichen.

Die Ladeplattform 16 kann wie im in der Fig. 4 gezeigten Ausführungsbeispiel auf der Nutzfläche 20, nämlich der langen Teilfläche 22 mit zwei nebeneinanderliegenden Abrollklappen 30 versehen sein, die zur Abrollsicherung von die Ladeplattform 16 befahrenden Rollwagen dienen. Außerdem weist die hier gezeigte Ladeplattform 16 auf der Nutzfläche 20, und zwar Bereichen der kurzen Teilfläche 23 und auf der Auffahrrampe 19 Profilierungen 31 auf. Gegebenenfalls kann auch die lange Teilfläche 20 ganz oder teilweise mit einer Profilierung 31 versehen sein.

*****

### Bezugszeichenliste:

- 10: Lastkraftwagen
- 11: Aufbau
- 12: Rückseite
- 13: Hubladebühne
- 14: Hubwerk
- 15: Tragrohr
- 16: Ladeplattform
- 17: Querrand
- 18: Querkante
- 19: Auffahrrampe
- 20: Nutzfläche
- 21: Unterseite
- 22: Teilfläche (lang)
- 23: Teilfläche (kurz)
- 24: Knickkante
- 25: Sehne
- 26: Boden
- 27: Längsrand
- 28: Längsrand
- 29: Erhöhung
- 30: Abrollklappe
- 31: Profilierung

## Patentansprüche

1. Hubladebühne zum Anbau an ein Fahrzeug mit einer eine Nutzfläche (20) aufweisenden Ladeplattform (16) und ein Hubwerk (14) zum Heben, Senken bzw. Verschwenken der Ladeplattform (16), wobei das Hubwerk (14) mit einem zum Fahrzeug weisenden Querrand (17) der Ladeplattform (16) verbunden ist und die obere Nutzfläche (20) der Ladeplattform (16) zwei in verschiedenen Ebenen liegende Teilflächen (22, 23) aufweist, **dadurch gekennzeichnet, dass** zwischen den Teilflächen (22, 23) eine parallel zum Querrand (17) verlaufende Knickkante (24) vorhanden ist, die die Teilflächen (22, 23) stufenlos verbindet, und an gegenüberliegenden Längsrändern (27) der Ladeplattform (16) schmale streifenförmige Erhöhungen (29) gebildet sind, die auf jeweils einer Sehne (25) zwischen dem Querrand (17) und der hinteren Querkante (18) der Nutzfläche (20) liegende durchgehende, ebenflächige Oberseiten aufweisen.

2. Hubladebühne nach Anspruch 1, **dadurch gekennzeichnet, dass** die Teilflächen (22, 23) ausgehend von der die Nutzfläche (20) bildenden Oberseite der Ladeplattform (16) unter einem Winkel von weniger als 180° zueinander verlaufen.

3. Hubladebühne nach Anspruch 1 oder 2, **dadurch gekennzeichnet, dass** die Teilflächen (22, 23) unterschiedlich groß sind, insbesondere eine von zum Fahrzeug weisende Querrand (17) ausgehende Teilfläche (23) kürzer ist als eine von der gegenüberliegenden, freien Querkante (18) der Ladeplattform (16) ausgehende Teilfläche (22).

4. Hubladebühne nach Anspruch 3, **dadurch gekennzeichnet, dass** die lange Teilfläche (22) vier- bis achtfach so lang ist wie die kürzere Teilfläche (23).

5. Hubladebühne nach einem der Ansprüchen 3 oder 4, **dadurch gekennzeichnet, dass** die von der freien Querkante (18) ausgehende längere Teilfläche (22) der Nutzfläche (20) unter einem spitzen Winkel (α) zum Boden (26) verläuft, wenn die Ladeplattform (16) auf dem Boden (26) abgesenkt ist.

6. Hubladebühne nach Anspruch 5, **dadurch gekennzeichnet, dass** der spitze Winkel α, unter dem die längere Teilfläche (22) zum Boden (26) verläuft im Bereich von 2° bis 4° liegt.

7. Hubladebühne nach einem der Ansprüchen 3 bis 5, **dadurch gekennzeichnet, dass** die kürzere Teilfläche (23) unter einem größeren Winkel (β), vorzugsweise einen zwei- bis vierfach so großen Winkel (β) als die längere Teilfläche (22), zum Boden (26) verläuft, wenn die Ladeplattform (16) auf dem Boden (26) abgesenkt ist.

8. Hubladebühne nach Anspruch 7, **dadurch gekennzeichnet, dass** der Winkel (β) der kürzeren Teilfläche (23) gegenüber dem Boden (26) 6° bis 12° vorzugsweise 8° bis 11°, beträgt.

9. Hubladebühne nach einem der Ansprüchen 3 bis 8, **dadurch gekennzeichnet, dass** der hinteren Querkante (18) der Ladeplattform (16) mindestens eine vorzugsweise um eine Schwenkachse an der Querkante (18) schwenkbare keilartige Auffahrrampe (19) zugeordnet ist.

## Claims

1. Cantilever lift for attaching to a vehicle, with a loading platform (16) having a useful surface (20), and a lifting mechanism (14) for lifting, lowering and pivoting the loading platform (16), wherein the lifting mechanism (14) is connected to a transverse border (17) of the loading platform (16), said transverse border facing the vehicle, and the upper useful surface (20) of the loading platform (16) has two partial surfaces (22, 23) lying in different planes, **characterized in that** a bending edge (24) running parallel to the transverse border (17) is present between the partial surfaces (22, 23) and connects the partial surfaces (22, 23) steplessly, and narrow, strip-shaped elevations (29) are formed on opposite longitudinal borders (27) of the loading platform (16), said elevations having continuous, planar upper sides located on a respective chord (25) between the transverse border (17) and the rear transverse edge (18) of the useful surface (20).

2. Cantilever lift according to Claim 1, **characterized in that** the partial surfaces (22, 23) run at an angle of less than 180° with respect to each other from the upper side of the loading platform (16), which upper side forms the useful surface (20).

3. Cantilever lift according to Claim 1 or 2, **characterized in that** the partial surfaces (22, 23) differ in size, in particular a partial surface (23) starting from the transverse border (17) facing the vehicle is shorter than a partial surface (22) starting from the opposite, free transverse edge (18) of the loading platform (16).

4. Cantilever lift according to Claim 3, **characterized in that** the long partial surface (22) is four to eight times the length of the shorter partial surface (23).

5. Cantilever lift according to either of Claims 3 and 4, **characterized in that** the longer partial surface (22) of the useful surface (20), which partial surface starts from the free transverse edge (18), runs at an acute angle (α) to the ground (26) when the loading platform (16) is lowered onto the ground (26).

6. Cantilever lift according to Claim 5, **characterized in that** the acute angle α at which the longer partial surface (22) runs with respect to the ground (26) is within the range of 2° to 4°.

7. Cantilever lift according to one of Claims 3 to 5, **characterized in that** the shorter partial surface (23) runs with respect to the ground (26) at a larger angle (β) , preferably an angle (β) which is two to four times the size of the longer partial surface (22), when the loading platform (16) is lowered onto the ground (26).

8. Cantilever lift according to Claim 7, **characterized in that** the angle (β) of the shorter partial surface (23) is 6° to 12°, preferably 8° to 11°, to the ground (26).

9. Cantilever lift according to one of Claims 3 to 8, **characterized in that** the rear transverse edge (18) of the loading platform (16) is assigned at least one wedge-like entry ramp (19) which is preferably pivotable about a pivot axis on the transverse edge (18).

## Revendications

1. Plate-forme de chargement par levage destinée au montage sur un véhicule, comprenant une plate-forme de chargement (16) présentant une surface fonctionnelle (20) et un châssis de levage (14) pour lever, abaisser ou faire pivoter la plate-forme de chargement (16), le châssis de levage (14) étant connecté à un bord transversal (17) de la plate-forme de chargement (16) tourné vers le véhicule, et la surface fonctionnelle supérieure (20) de la plate-forme de chargement (16) présentant deux surfaces partielles (22, 23) situées dans des plans différents, **caractérisée en ce qu'**entre les surfaces partielles (22, 23) est prévue une arête d'inflexion (24) s'étendant parallèlement au bord transversal (17), laquelle relie sans joint les surfaces partielles (22, 23), et, au niveau de bords longitudinaux opposés (27) de la plate-forme de chargement (16), sont formés des rehaussements étroits en forme de bande (29) qui présentent des côtés supérieurs à face plane situés en continu sur une corde (25) respective entre le bord transversal (17) et l'arête transversale arrière (18) de la surface fonctionnelle (20).

2. Plate-forme de chargement par levage selon la revendication 1, **caractérisée en ce que** les surfaces partielles (22, 23) s'étendent suivant un angle inférieur à 180° l'une par rapport à l'autre à partir du côté supérieur de la plate-forme de chargement (16) formant la surface fonctionnelle (20).

3. Plate-forme de chargement par levage selon la revendication 1 ou 2, **caractérisée en ce que** les surfaces partielles (22, 23) sont de tailles différentes, en particulier une surface partielle (23) partant du bord transversal (17) tourné vers le véhicule est plus courte qu'une surface partielle (22) partant de l'arête transversale libre opposée (18) de la plate-forme de chargement (16).

4. Plate-forme de chargement par levage selon la revendication 3, **caractérisée en ce que** la surface partielle longue (22) est quatre à huit fois plus longue que la surface partielle plus courte (23).

5. Plate-forme de chargement par levage selon l'une quelconque des revendications 3 ou 4, **caractérisée en ce que** la surface partielle plus longue (22) de la surface fonctionnelle (20), partant de l'arête transversale libre (18), s'étend suivant un angle aigu (α) par rapport au fond (26), lorsque la plate-forme de chargement (16) est abaissée sur le fond (26).

6. Plate-forme de chargement par levage selon la revendication 5, **caractérisée en ce que** l'angle aigu α suivant lequel la surface partielle plus longue (22) s'étend par rapport au fond (26) est compris dans une plage de 2° à 4°.

7. Plate-forme de chargement par levage selon l'une quelconque des revendications 3 à 5, **caractérisée en ce que** la surface partielle plus courte (23) s'étend suivant un angle plus grand (β), de préférence un angle (β) deux à quatre fois plus grand que la surface partielle plus longue (22), par rapport au fond (26), lorsque la plate-forme de chargement (16) est abaissée sur le fond (26).

8. Plate-forme de chargement par levage selon la revendication 7, **caractérisée en ce que** l'angle (β) de la surface partielle plus courte (23) par rapport au fond (26) vaut 6° à 12°, de préférence 8° à 11°.

9. Plate-forme de chargement par levage selon l'une quelconque des revendications 3 à 8, **caractérisée en ce que** l'arête transversale arrière (18) de la plate-forme de chargement (16) est associée à au moins une rampe de roulement (19) en forme de cale pouvant pivoter de préférence autour d'un axe de pivotement au niveau de l'arête transversale (18).
